# EUROPEAN PATENT APPLICATION

(11) **EP 4 686 267 A2**
(43) Date of publication of application: **28.01.2026**
(21) Application number: 25221680.9
(22) Date of filing: 18.11.2022
(51) Int. Cl.: H04W 48/12

(54) **MECHANISMS FOR THE REPORTING OF EBCS NEIGHBOR ACCESS POINTS AND THEIR AVAILABLE SERVICE**

(30) Priority: 19.11.2021 US 202163281355 P; 28.02.2022 US 202263314727 P
(62) Divisional of application: 22839553.9
(71) Applicant: InterDigital Patent Holdings, Inc., Wilmington, DE 19809 (US)
(72) Inventor: DE LA OLIVA, Antonio, Conshohocken, 19428 (US); WANG, Xiaofei, New York, 10120 (US); GAZDA, Robert, Conshohocken, 19428 (US); YANG, Rui, Melville, 11747 (US)
(74) Representative: Schmidt-Uhlig, Thomas

(57) **Abstract**

A station (STA) for an 802.11 wireless local area network. The STA comprises a transmitter configured to transmit, to an access point (AP) a probe request frame, and a receiver configured to receive, from the AP, a probe response frame including enhanced broadcast services (EBCS) parameters. The EBCS parameters include a control field, a first field including information associated with a next transmission of an EBCS Info frame, and a second field including information associated with a certificate of the AP. The control field includes a first indication that the first field is present in the EBCS parameters and a second indication the second field is present in the EBCS parameters.

## Description

### CROSS-REFERENCE TO RELATED APPLICATIONS

This application claims the benefit of U.S. Provisional Patent Application No. 63/281,355, filed November 19, 2021, and No. 63/314,727 filed February 28, 2022, the contents of which are incorporated herein by reference.

### BACKGROUND

IEEE 802.11bc describes modifications to the IEEE 802.11 medium access control (MAC) specifications that enable enhanced transmission and reception of broadcast data both in an infrastructure BSS where there is an association between the transmitter and the receiver(s) and in cases where there is no association between transmitter(s) and receiver(s).

IEEE 802.11bc has multiple uses cases, including, for example: (1) stadium video distribution; (2) low power sensor UL broadcast; (3) intelligent transportation broadcast; (4) broadcast services for event production; (5) multi-lingual and emergency broadcast; (6) VR eSports video distribution; (7) multi-channel data distribution; (8) lecture room slide distribution; (9) regional based broadcast TV service; and (10) access point (AP) tagged UL forwarding.

Stadium video distribution provides enhanced Broadcast Services (eBCS) for videos to a large number of densely located STAs. These STAs may be associated, or unassociated, with the AP or may be STAs that do not transmit (i.e. receive functionality only).

In the low power sensor UL broadcast use case, pre-configured loT devices automatically connect to the end server (e.g. broadcast content server) through eBCS APs with zero setup action required. This functionality includes low power loT devices in a mobility state report to their servers through eBCS APs without scanning and association.

In the intelligent transportation broadcast use case, Connected Vehicle Roadside Equipment (RSE), Connected Vehicle (OBE) and Personal Informational Device (PID) provide eBCS service for transportation related information for railway crossing or RSE provides eBCS service for local traveler information.

In the broadcast services for event production use case, enhanced Broadcast Services (eBCS) for multiple data streams suitable for different customer STAs are supported. The number of STAs may be large and these STAs may be static or mobile.

In the multi-lingual and emergency broadcast use case, enhanced Broadcast Services (eBCS) for emergency and/or Multi-lingual service are provided to a large number of densely located STAs. These STAs may be associated, or unassociated, with the AP, or may be STAs that do not transmit. These STAs may be static or mobile.

In the VR eSports video distribution use case, at the location of VR eSports games (such as an arena), distribution of the video that is the view of the player to the audiences is supported.

In the multi-channel data distribution use case, an AP broadcasts the same information in different languages each in a dedicated channel. A user can choose one of the channels.

In the lecture room slide distribution use case, simultaneous distribution of slides on the screen to audience PCs, tablets, etc. is supported. The audience does not need to download visual aids and change pages. Lecture room slide distribution allows synchronized slide distribution to all students.

In the regional based broadcast TV service use case, local news and other TV content can be distributed to consumer bring your own device (BYOD) devices (not TV receiver) by a small local TV company. For example, in the case of a disaster, evacuation information will be distributed without any complex customer operation.

Finally, in the AP tagged UL forwarding use case, a pre-configured, low-cost low power tracker device automatically connects to an end server through eBCS APs in the neighborhood with zero setup action. The tracker device periodically reports to its server through eBCS APs without scanning and association. eBCS AP appends metadata (such as IP, date/time, location, RSSI etc.) to the packets before forwarding to the destination server. Meta-data from an eBCS AP will be protected.

### SUMMARY

A method performed by a station (STA) in an 802.11 wireless local area network. The STA receives, from an access point (AP), a reduced neighbor report. The Reduced Neighbor Report includes a Neighbor AP Information field, that includes information regarding a target beacon transmission time (TBTT) of an enhanced broadcast services (EBCS) Info frame transmission by a neighbor AP. The STA receives the EBCS Info frame from the neighbor AP based on the receiving reduced neighbor report. The neighbor AP information field may include an indication that the neighbor AP information field contains at least one EBCS Info Frame Tx Countdown subfield. The STA may receive an EBCS traffic stream from the neighbor AP based on the received EBCS Info frame.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
Figure 2 is an illustration of an EBCS Tx Content ID element;
Figure 3 is an illustration of the format of the EBCS Tx Content ID element;
Figure 4 is an illustration of the format of the EBCS Tx Content ID field contained in the EBCS Tx Content IDs element;
Figure 5 is an illustration of the Control field of the EBCS Tx Content ID field;
Figure 6 is an illustration of the EBCS ID Bitmap and Offset field of the EEBCS Tx Content ID field;
Figure 7 is an illustration of the Beacon Frame Body that includes the EBCS Tx Content ID element;
Figure 8 is an illustration of the Probe Request Frame Body that includes the EBCS Tx Content ID element;
Figure 9 is an illustration of the Probe Response Frame Body that includes the EBCS Tx Content ID element;
Figure 10 is an illustration of the Reduced Neighbor Report element;
Figure 11 is an illustration of the Neighbor AP Information field format;
Figure 12 is an illustration of the TBTT Information Header subfield format;
Figure 13 shows the TBTT Information Field Contents When the TBTT Information Field Type Subfield is Set to 0;
Figure 14 shows the TBTT Information Field Contents When the TBTT Information Field Type Subfield is Set to 1;
Figure 15 is an illustration of the TBTT Information Field format;
Figure 16 is an illustration of the optional subelements for the Neighbor Report including an EBCS Information Frame TX Countdown NR element;
Figure 17 shows the format of the EBCS Information Frame TX Countdown NR element;
Figure 18 is an illustration of the optional subelements of the Neighbor Report including an EBCS Tx Content ID NR element;
Figure 19 shows the format of the EBCS Tx Content ID NR element format;
Figure 20 shows the format of the EBCS Contents field of the EBCS Tx Content ID NR element;
Figure 21 shows the format of the EBCS Information frame according to one embodiment;
Figure 22 shows the format of the EBCS Info Control field;
Figure 23 shows the format of the Neighbor Report field;
Figure 24 is an illustration of the format of the EBCS Response ANQP element;
Figure 25 shows the format of the Enhanced Broadcast Services Response Tuple;
Figure 26 shows the format of the Response control field of the Enhanced Broadcast Services Response Tuple;
Figure 27 shows the values that the Broadcast Service Transmitting field of the Enhanced Broadcast Services Response Tuple may take;
Figure 28 shows the format of the Content Information Control Subfield;
Figure 29 is a signal flow diagram of an example procedure where an EBCS STA receives an EBCS Tx Content IDs element; and
Figure 30 is a signal flow diagram of an example procedure where an EBCS STA receives a Reduced Neighbor Report.

### DETAILED DESCRIPTION

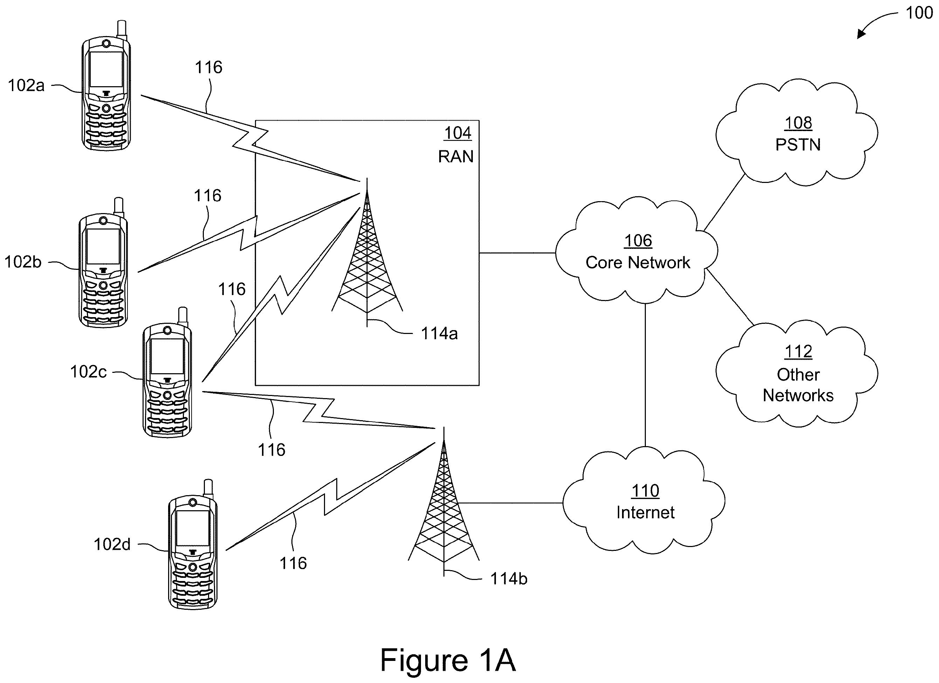

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

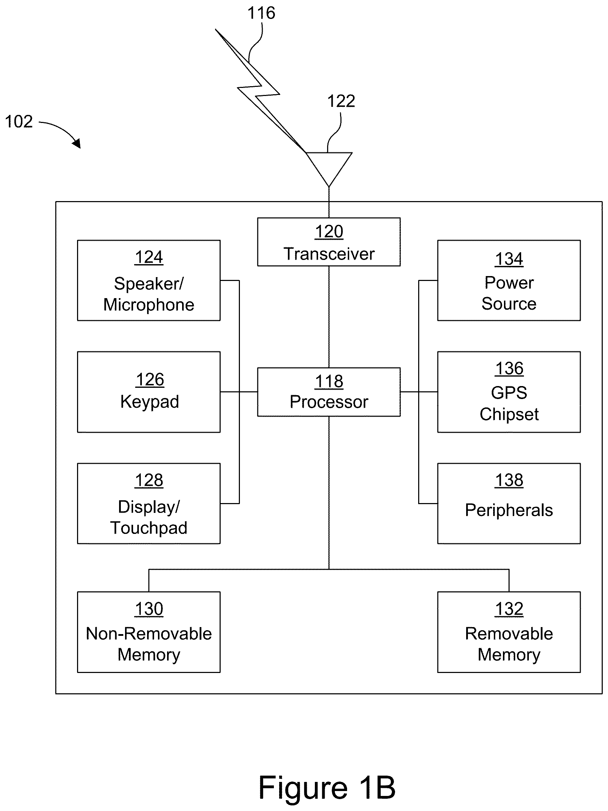

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

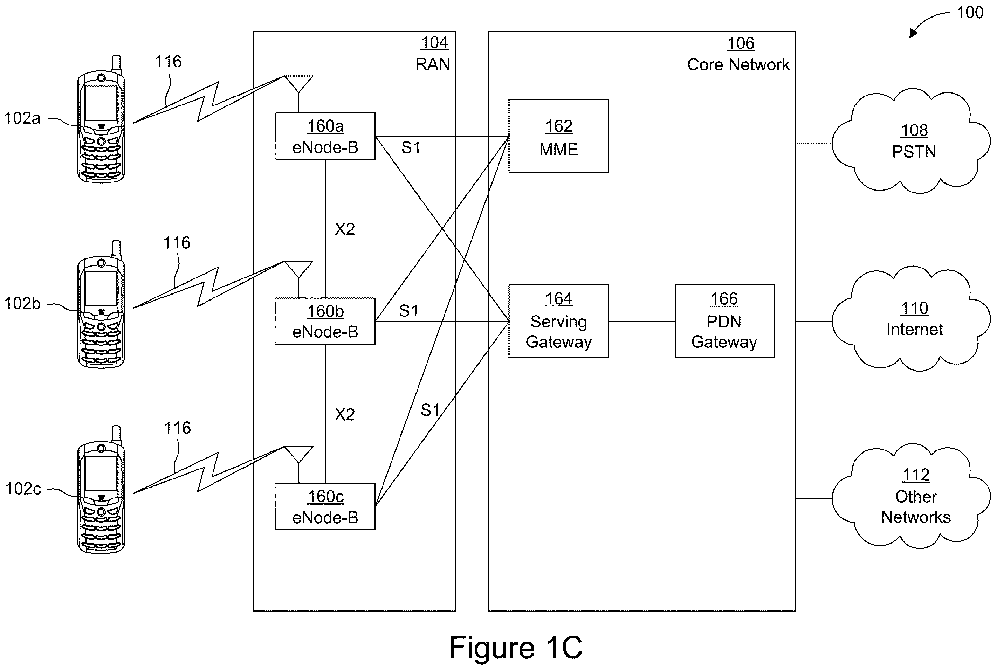

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

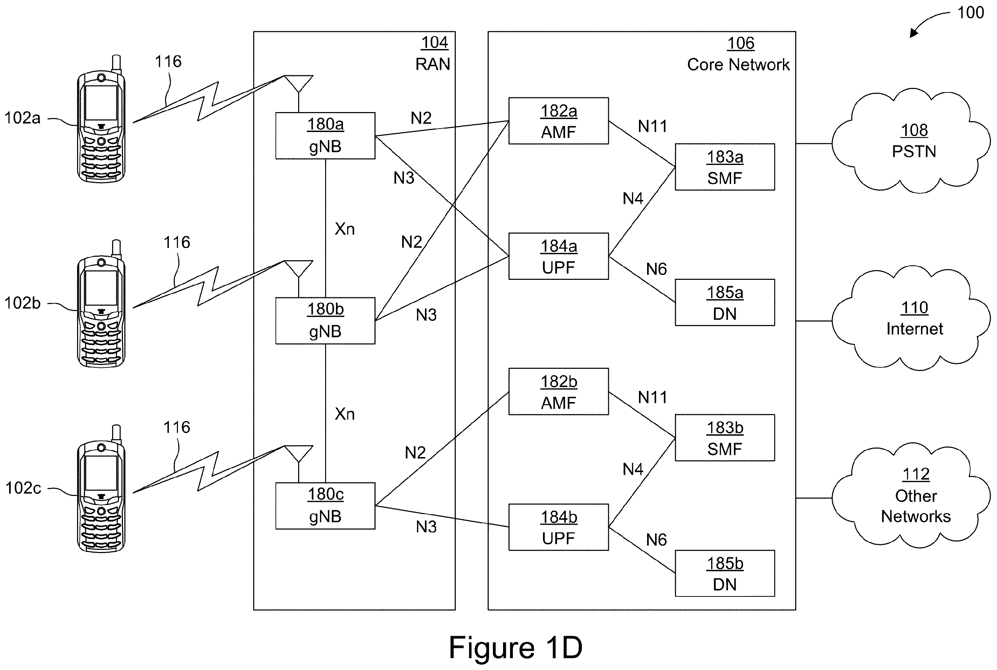

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The current Enhanced Broadcast Service (EBCS) specification lacks mechanisms to help an EBCS STA select the best AP to listen to when roaming. EBCS STAs may consume an EBCS stream(s) without association. Even without the need of associating to an AP, the STAs need to understand which AP to listen to, including its channel. This includes understanding which of the surrounding APs provides the desired EBCS stream(s).

IEEE 802.11-2020 provides several mechanisms to improve the AP selection when a STA is in a mobility state and based on the services provided by the AP. These mechanisms include the Reduced Neighbor Report, which provides information to the STA about neighbor APs and their channel. Other mechanisms are, for example, the Service Hint, introduced in IEEE 802.11aq, provide information on the services available at the network.

A new information element providing compressed information about the EBCS Content IDs available at a certain AP may be sent from an AP to a STA. Since EBCS Content IDs are locally unique with respect to an AP certificate, this new information element provides information about the EBCS Content ID and the associated AP's Certificate. The information carried in this new information element may be included in a Neighbor Report Optional element, in some embodiments. The Reduced Neighbor Report may also be changed to accommodate information on the EBCS Info frame transmission by an AP, which assists a STA to find desired services when EBCS roaming. This information may also be added to the EBCS Info frame and to a Neighbor Report Optional subelement. Finally, new information may be included in the Enhanced Broadcast Services Response ANQP-element to be aligned with the EBCS Response frame, including information necessary to know when the EBCS traffic stream will be transmitted.

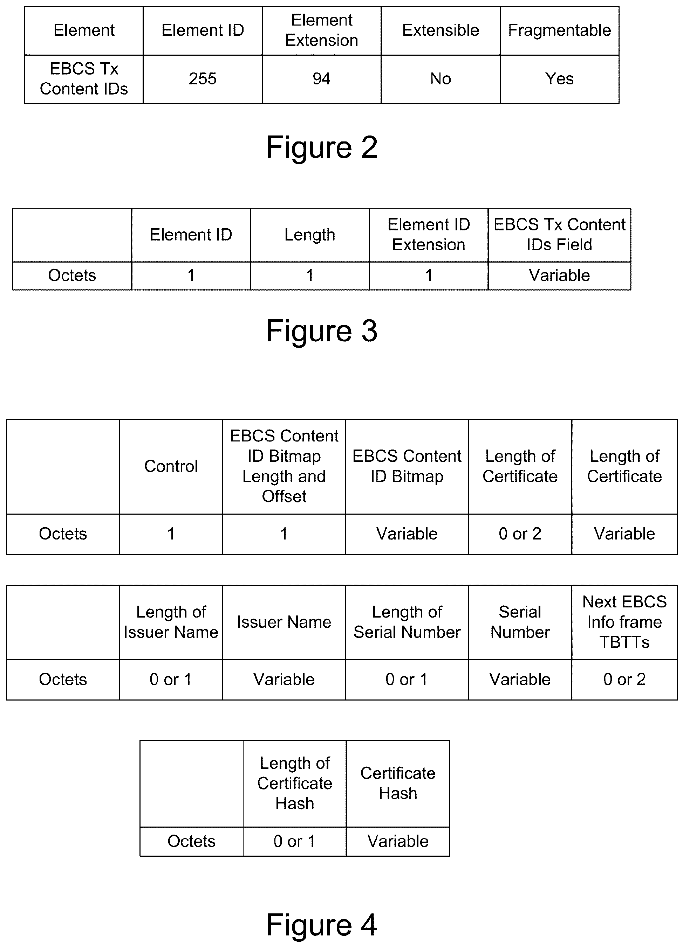

In one embodiment, a new element that may be transmitted in beacons and probe response frames indicates the EBCS Content IDs transmitted by the AP. In one embodiment, the new element transmitted by an AP may be called an EBCS Tx Content IDs element. .The element ID and description is shown in Figure 2. The EBCS Tx Content IDs element may provide information on the Content IDs and Certificate used for EBCS of the AP transmitting the element. The format of the EBCS Tx Content ID may be as shown in Figure 3.

In one embodiment, the Element ID and Length fields may be as defined in IEEE 802.11-2020 section 9.4.2.1.

The EBCS Tx Content ID field may contain one or more of the EBCS Tx Content IDs field described below with reference to Figure 4. Referring to Figure 4, the EBCS Tx Content ID fields may include information regarding the EBCS Content IDs broadcasted by this AP. Since Content IDs may be only locally meaningful with respect to an AP's certificate, the Certificate of the AP may also be included.

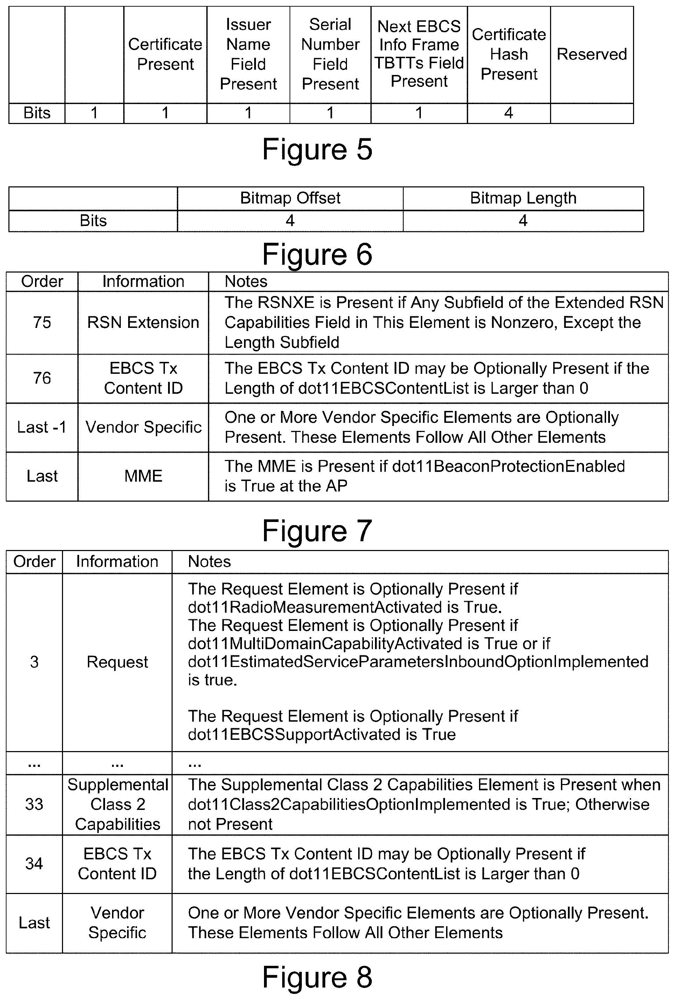

The Control field of the EBCS Tx Content ID field of Figure 4 may indicate which of the different elements of the EBCS Tx Content IDs field are included in the element. It may take the form as shown in Figure 5.

Referring to Figure 5, the Certificate present subfield may indicate if the Length of Certificate and Certificate fields are present in the EBCS TX Content IDs field. If set to 0 both fields may not be present on the EBCS TX Content IDs field.

The Issuer Name field present subfield may indicate if the Length of Issuer Name and Issuer Name fields are present in the EBCS TX Content IDs field. If set to 0 both fields may not be present on the EBCS TX Content IDs field.

The Serial Number field present subfield may indicate if the Length of Serial Number and Serial Number fields are present in the EBCS TX Content IDs field. If set to 0 both fields may not be present on the EBCS TX Content IDs field.

The Next EBCS Info frame TBTTs field present subfield may indicate if the Next EBCS Info frame TBTTs field is present in the EBCS TX Content IDs field. If set to 0 the field may not be present on the EBCS TX Content IDs field.

The Certificate Hash present subfield may indicate if the Length of Certificate Hash and Certificate Hash subfields are present in the EBCS TX Content IDs field. If set to 0 both fields may not be present on the EBCS TX Content IDs field.

Referring now to Figure 4 and continuing the description of the EBCS Tx Content ID field, the EBCS Content ID bitmap Length and Offset field may follow the format as shown in Figure 6. The Bitmap Offset subfield may indicate the offset (e.g., the EBCS Content ID indicated in the most significant bit of the EBCS Content ID bitmap field), in units of two octets. For example, when set to 0, the Bitmap Offset subfield may indicate that the most significant bit of the EBCS Content ID bitmap may correspond to EBCS Content ID 0. When the Bitmap Offset subfield is set to 1, it may indicate the that the most significant bit of the EBCS Content ID bitmap may correspond to EBCS Content ID 16. The Bitmap Length subfield may indicate the length of the EBCS Content ID bitmap field in octets +1. As an example, when Bitmap Offset is set to 0 and Bitmap Length is set to 0xF, the most significant bit of the EBCS Content ID bitmap may indicate EBCS Content ID 0. Bitmap Length equal to 0xF may indicate the EBCS Content ID is 16 bytes in length, therefore the EBCS Content ID bitmap may include the information on 16x8=128 EBCS Content IDs. Through the combination of the Bitmap Offset and Bitmap Length, an AP may provide the availability of up to 128 EBCS Content IDs simultaneously.

Referring again to Figure 4 and continuing the description of the EBCS Tx Content ID field, the EBCS Content ID bitmap may include one bit per EBCS Content ID (subject to the length restrictions set in the EBCS Content ID bitmap length and offset field). A bit in the EBCS Content ID bitmap may be set to 0 if the EBCS is not transmitted and may be set to 1 when the EBCS Content ID is transmitted by the AP.

The Length of Certificate field may indicate the length of the Certificate field in octets. The Certificate field may include a X.509v3 certificate encoded according to IETF RFC 5280. An X.509 Certificate can also be uniquely identified by the combination of the Issuer Name and Serial Number of the certificate. The fields Issuer Name and Serial Number may include this information.

The Length of Issuer Name may indicate the length in octets of the Issuer Name field.

The Issuer Name field may contain the Issuer Name field of the Certificate of the AP encoded according to IETF RFC 5280.

The Length of the Serial Number field may indicate the length of the Serial Number field.

The Serial Number field may contain the Serial Number of the AP's certificate, encoded as defined in RFC 5280.

The Next EBCS Info frame TBTTs subfield may indicate the number of TBTTs until the beacon interval in which the next EBCS Info frame may be transmitted.

The Length of Certificate Hash subfield may indicate the length of the Certificate Hash field in octets.

Figure 4 indicates 1 octet for the Length of Certificate Hash field, indicating a Length of Certificate Hash of up to 256 octets, but if hashes longer than 2048 bits are desired, this field may take 2 octets or more.

The Certificate Hash subfield may contain a hash of the Certificate of the AP provider used for EBCS.

In addition to the above described formatting, there exist other possible formats for this frame including: (1) a single 256 bits EBCS Content ID bitmap; (2) the information contained in the Bitmap Offset subfield of the EBCS Content ID bitmap Length and Offset field may be signaled in the 4 bits reserved within the Control field; and/or (3) providing a completely separated Bitmap Offset and Bitmap Length fields, each of them may be encoded as a byte.

The EBCS Tx Content IDs element may be used in Beacon frames and Probe Response Frames to indicate the available EBCS Content IDs. In addition, the EBCS Tc Content IDs element may be used by STAs to probe APs transmitting the EBCS traffic stream identified by the Content ID and Certificate. This may be done by including the EBCS Tx Content ID element in Probe Request frames.

Accordingly, the Beacon frame body (as described in IEEE 802.11-2020) may include the EBCS Tx Content ID element at position 76 (or any other position), as shown in Figure 7. Similarly, the Probe Request frame body (as described in IEEE 802.11-2020) may include an EBCS Tx Content ID element at position 34 (or any other position), as shown in Figure 8.

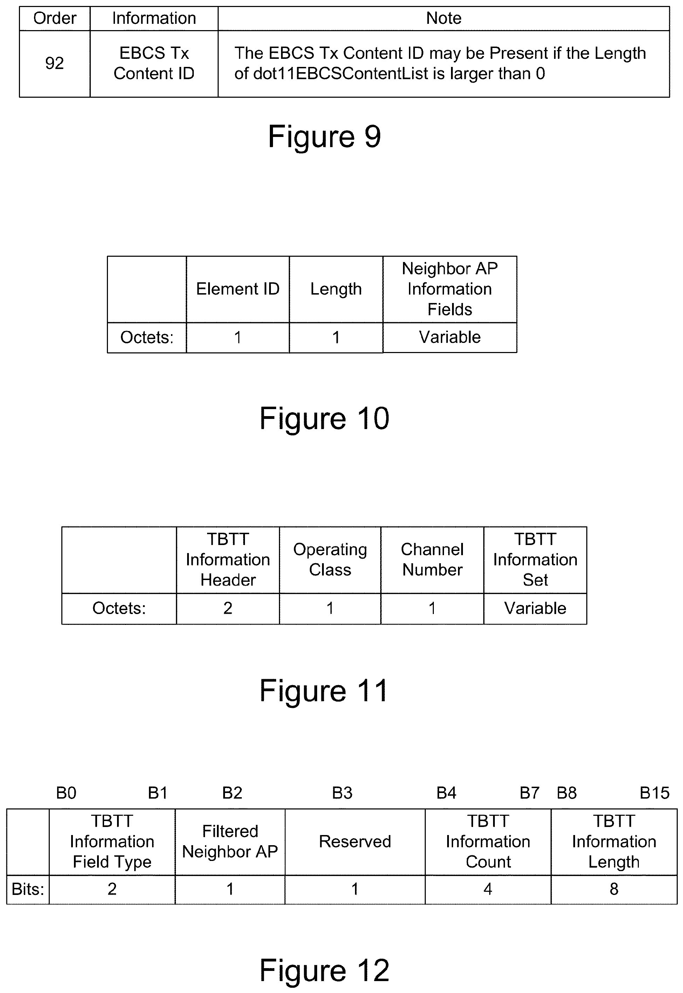

Further, Probe Response frames may also include the EBCS Tx Content ID element, as shown in Figure 9.

In another embodiment, an extension to the currently defined Reduced Neighbor Report includes EBCS information of neighboring APs.

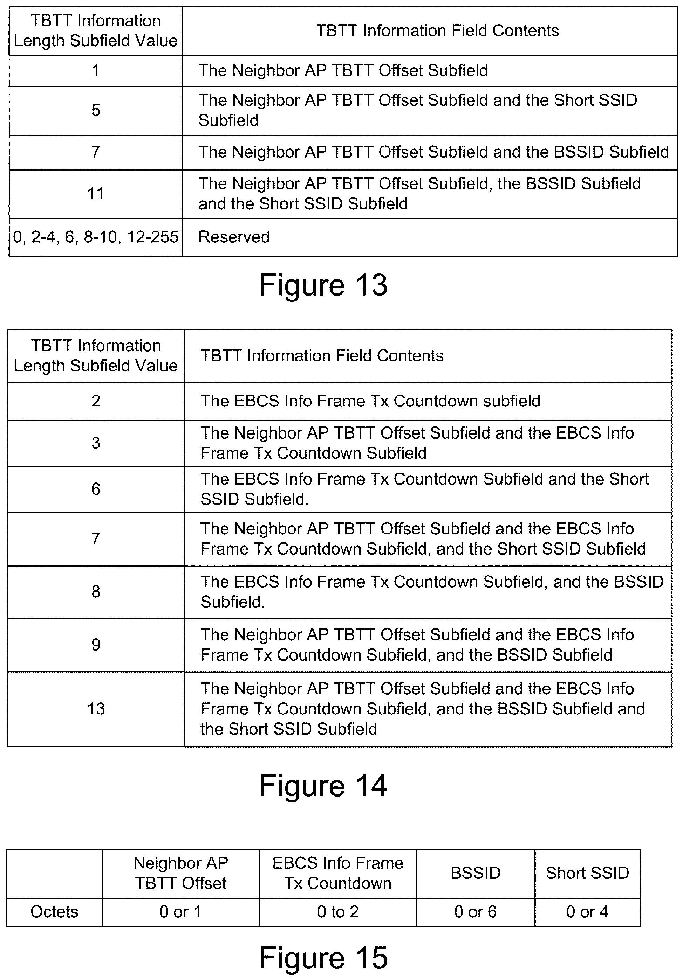

The Reduced Neighbor Report element (as defined in IEEE 802.11-2020 section 9.4.2.170) contains channel and other information related to neighbor APs. The format of the Reduced Neighbor Report element is shown in Figure 10. The Element ID and Length fields may be as defined in IEEE 802.11-2020 section 9.4.2.1. The Neighbor AP Information Fields field contains one or more of the Neighbor AP Information field (for example, as described in IEEE 802.11-2020 section 9.4.2.170.2). Each Neighbor AP Information field specifies Target Beacon Transmission Time (TBTT) and other information related to a group of neighbor APs on one channel, and may also provide information on the time of the next transmission of the EBCS Info frame for the signaled AP. The format of the Neighbor AP Information field is shown in Figure 11. The Neighbor AP Information field may include a TBTT Information Set field, that includes one or more TBTT Information fields (described below with reference to Figure 15).

The TBTT Information Header subfield format is shown in Figure 12. The TBTT Information Field Type subfield may identify, together with the TBTT Information Length subfield, the format of the TBTT Information field. It may take values 0 and 1. Values 2 and 3 may be reserved. The Filtered Neighbor AP subfield may be reserved except when the Reduced Neighbor Report element is carried in a Probe Response frame transmitted by a television high throughput (TVHT) AP. In a Probe Response frame transmitted by a TVHT AP, the Filtered Neighbor AP subfield may be set to 1 if the specific SSID corresponding to every BSS of the APs in this Neighbor AP Information field matches the SSID in the corresponding Probe Request frame; otherwise it may be set to 0. The TBTT Information Count subfield may contain the number of TBTT Information fields included in the TBTT Information Set field of the Neighbor AP Information field, minus one.

The TBTT Information Length subfield may indicate the length of each TBTT Information field included in the TBTT Information Set field of the Neighbor AP Information field. When the TBTT Information Field Type subfield is set to 0, the TBTT Information Length subfield: (1) may contain the length in octets of each TBTT Information field that is included in the TBTT Information Set field of the Neighbor AP Information field; (2) is set to 1, 5, 7, or 11; other values are reserved; (3) indicates the TBTT Information field contents for example, as shown in Figure 13.

A TVHT AP may set the TBTT Information Length subfield to 1. When the TBTT Information Field Type subfield is set to 1 (or any other value not used by the specification to define a new type, i.e. 1, 2 or 3), the TBTT Information Length subfield may (1) contain the length in octets of each TBTT Information field that may be included in the TBTT Information Set field of the Neighbor AP Information field, which may be extended with information on the TBTTs to the next EBCS info frame; (2) be set to 3, 7, 9 or 13; other values may be reserved; and/or (3) indicate the TBTT Information field contents as shown in Figure 14.

Referring back to Figure 11 and continuing to describe the Neighbor AP Information field format, the Operating Class field may indicate a channel starting frequency that, together with the Channel Number field, indicates the primary channel of the BSSs of the APs in this Neighbor AP Information field (the Operating Class field and Channel Number tuple indicate the primary channel in order to assist with passive scanning).

The Channel Number field may indicate the last known primary channel of the APs in this Neighbor AP Information field. Channel Number is defined within an Operating Class as shown in Table E-4 of the IEEE 802.11-2020 standard.

Finally, the TBTT Information Set may include one or more TBTT Information fields. The TBTT Information Field format is shown in Figure 15. The Neighbor AP TBTT Offset subfield may indicate the offset in TUs, rounded down to nearest TU, to the next TBTT of an AP's BSS from the immediately prior TBTT of the AP that transmits this element. The value 254 indicates an offset of 254 TUs or higher. The value 255 may indicate an unknown offset value. The EBCS Info Frame TX Countdown subfield may indicate the number of TBTTs until the transmission of the next EBCS Info frame. The value 1 indicates that the frame is transmitted following the next TBTT. The value 0 is reserved. The BSSID field is defined in IEEE 802.11-2020 9.2.4.3.4. The Short SSID subfield is calculated as given in IEEE 802.11-2020 9.4.2.170.3.

In some embodiments, the Reduced Neighbor Report may be coupled with the EBCS Tx Content IDs element defined above, to also provide the list of EBCS Content IDs available in the different APs.

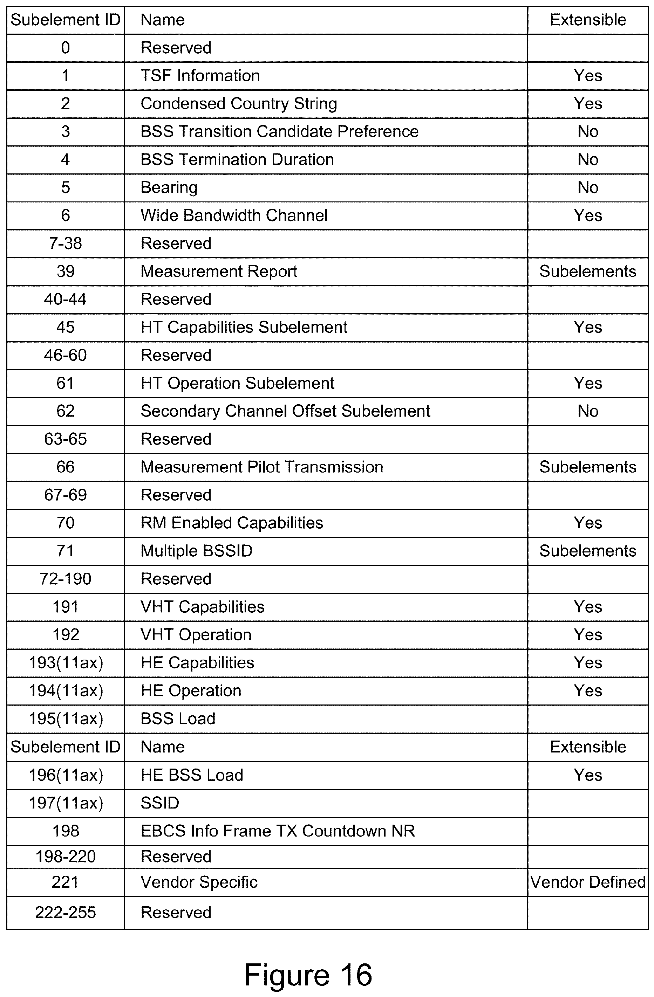

In another embodiment, an EBCS Info Frame TX Countdown NR subelement may be included in the Neighbor Report to inform a STA about the EBCS Info Frame TX Countdown information. This will enable STAs to receive a Neighbor Report including information about when the next EBCS Info frame will be transmitted by the neighboring AP. Figure 16 shows the optional subelements that may be present in the Neighbor Report, and the EBCS Info Frame TX Countdown NR element is shown at position 198, but could be present at any specified location.

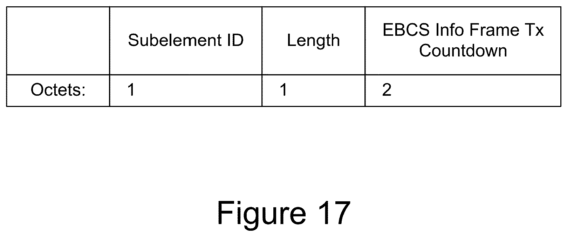

The format of the EBCS Info Frame TX Countdown NR element is shown in Figure 17. The Length field may be as defined as in section 9.4.3 of IEEE 802.11-2020. The EBCS Info Frame TX Countdown subfield may indicate the number of TBTTs until the transmission of the next EBCS Info frame. The value 1 indicates that the frame is transmitted following the next TBTT. The value 0 is reserved.

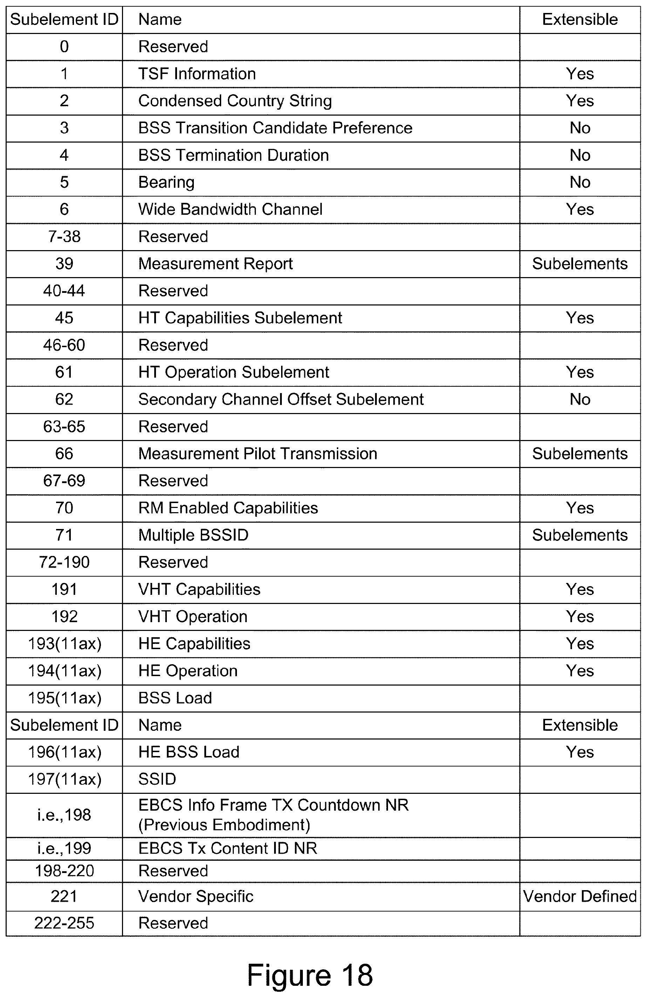

In another embodiment, an EBCS Tx Content ID NR subelement may be added to the Neighbor Report to inform a STA about the EBCS Tx Content ID. The EBCS Tx Content ID NR subelement includes the list of services and the certificate a neighboring AP is using for EBCS. Figure 18 shows the optional subelements that may be present in the Neighbor Report, and the EBCS Tx Content ID NR element is shown at position 199, but could be present at any specified location.

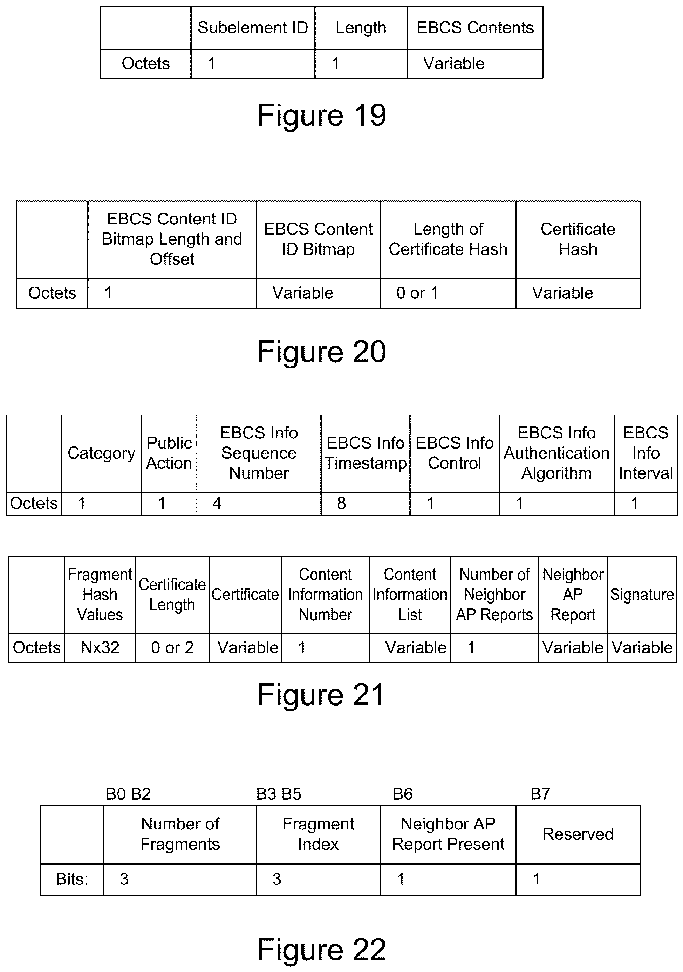

The format of the EBCS Tx Content ID NR element is shown in Figure 19. The length field may be defined as in section 9.4.3 of the IEEE 802.11-2020 standard. The EBCS Contents field format is shown in Figure 20.

Referring to Figure 20, the EBCS Content ID bitmap Length and Offset subfield, the EBCS Content ID bitmap, the Length of Certificate Hash, and the Certificate Hash subfields are as defined in the above description.

In another embodiment, the current EBCS Info frame carries information on the time at which the next EBCS Info frame transmitted from neighboring APs is expected. Accordingly, the format of EBCS Info frame of this embodiment is shown in Figure 21. Because the EBCS Info frame may not contain any Neighbor AP reports, it is necessary to signal that in the EBCS Info Control field. The EBCS Info Control field format is shown in Figure 22.

Referring to Figure 22, the Neighbor AP report present bit within the EBCS Info Control field, when set to 1, may indicate that the EBCS Info frame contains the Number of Neighbor AP reports and Neighbor AP report subfields.

Referring back to Figure 21, the Number of Neighbor AP reports indicates the number of Neighbor AP reports included in the Neighbor AP report field.

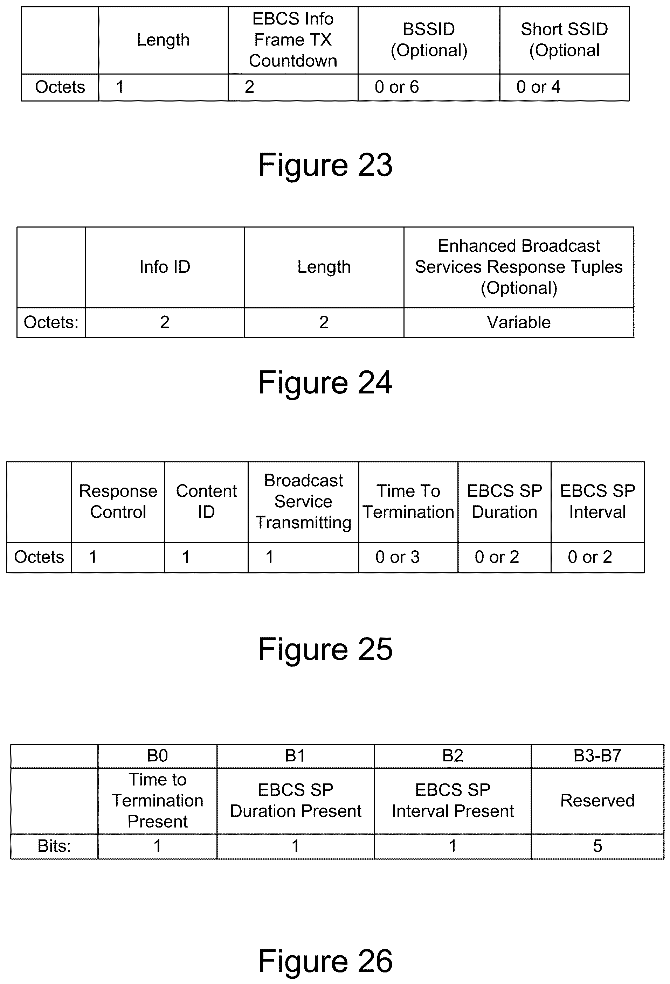

The Neighbor Report field format (the field may contain a number of Neighbor Report fields as indicated by the Number of Neighbor AP reports subfield) is formatted as shown in Figure 23. The Length subfield may indicate the length in octets of this Neighbor AP Report field. The EBCS Info Frame TX Countdown subfield may indicate the number of TBTTs until the transmission of the next EBCS Info frame. The value 1 indicates that the frame is transmitted following the next TBTT. The value 0 is reserved. The BSSID subfield contains the BSSID of the neighboring AP. The Short SSID contains the short SSID of the neighboring AP. One of the BSSID or Short SSID fields need to be present on each of the Neighbor AP report, in order to identify the AP this report correspond to.

In another embodiment, the Enhanced Broadcast Services Response ANQP-element may be extended to include information on the Time to Termination, EBCS SP Duration and Period. The Enhanced Broadcast Services Response ANQP-element provides a list of zero or more EBCS traffic streams that are available from a peer STA. The format of the EBCS Response ANQP-element is shown in Figure 24.

The Info ID and Length fields may be as defined in the IEEE 802.11-2020 standard, section 9.4.5.1. The Enhanced Broadcast Services Response Tuples field, if present, may contain one or more Enhanced Broadcast Services Response Tuple fields. Figure 25 shows the format of the Enhanced Broadcast Services Response Tuple.

The Response Control field of the Enhanced Broadcast Services Response Tuple is shown in Figure 26. A value 1 in the Time to Termination Present subfield may indicate that a Time to Termination subfield is included in the same Enhanced Broadcast Services Response Tuple subfield. A value 0 may indicate that the same Enhanced Broadcast Services Response Tuple subfield does not contain a Time to Termination subfield. A value 1 in the EBCS SP Duration Present subfield may indicate that an EBCS SP Duration subfield is included in the same Enhanced Broadcast Services Response Tuple subfield. A value 0 may indicate that the same Enhanced Broadcast Services Response Tuple subfield does not contain an EBCS SP Duration subfield. A value 1 in the EBCS SP Interval Present subfield may indicate that an EBCS SP Interval subfield is included in the same Enhanced Broadcast Services Response Tuple subfield. A value 0 may indicate that the same Enhanced Broadcast Services Response Tuple subfield does not contain an EBCS SP Interval subfield.

Referring back to Figure 25, the Content ID subfield may indicate the ID of the EBCS traffic stream.

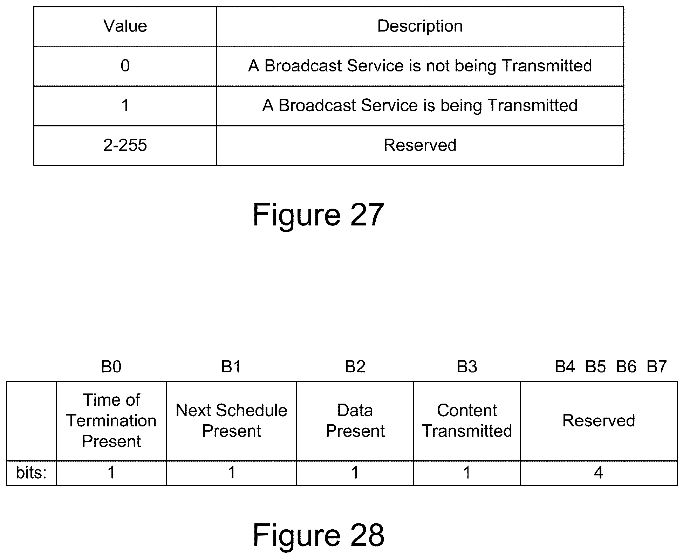

The Broadcast Service Transmitting field may take the values shown in Figure 27.

Still referring to Figure 25, the Time to Termination subfield may indicate the requested period in number of TBTTs after which the EBCS traffic stream identified by the Content ID subfield included in the same Enhanced Broadcast Services Response Tuple subfield is terminated. The value 0 may be reserved. An EBCS traffic stream identified by the Content ID subfield contained in an Enhanced Broadcast Services Response Tuple subfield may have no specific termination time if the Enhanced Broadcast Services Response Tuple subfield contains no Time to Termination subfield.

The EBCS SP Duration subfield may indicate the nominal duration of each EBCS service period in TUs. The EBCS SP Interval subfield may indicate the target interval between consecutive EBCS service periods for the EBCS traffic stream identified by the Content ID subfield in the same Enhanced Broadcast Services Response Tuple subfield in TUs.

In another embodiment, the EBCS Info frame provides information on the different services available via an AP. The EBCS Info frame may include one bit to indicate if the service is being transmitted at the time of transmitting the EBCS Info frame, or the frame may serve as the advertisement of a service that is not currently being transmitted although available. The assumption in this embodiment is that the Content ID serves as an identifier of an EBCS for all of the APs belonging to the same Group (as identified by the Group ID field). In order to get this information to a STA, the Content Information Control subfield of the EBCS Info frame may include a Content Transmitted subfield as shown in Figure 28. The Content Transmitted subfield, when set to 1, indicates the EBCS identified by the Content ID field contained in the Content Information field of the EBCS Info frame, is being transmitted in this AP. When set to 0, it indicates the EBCS identified by the Content ID field contained in the Content Information field of the EBCS Info frame, is being advertised (therefore available) but not currently transmitted by this AP.

The following embodiments enhance consumption of EBCS traffic streams by STAs that roam in a certain area. The embodiments that have been described above may provide information on: (1) the services available at a certain AP and (2) the time at which the next EBCS Info frame will be transmitted by neighboring APs. This may be critical in order to reduce the time a STA needs to stop receiving EBCS frames from a first AP, to listen to another channel, and to detect EBCS APs and their services (indicated by the EBCS Info frame).

In one embodiment, the EBCS Tx Content IDs element enables an AP to advertise in a compact way the EBCS traffic streams available (by indicating their Content IDs) and the certificate of the AP. This element can be transmitted in Beacons or Probe Response frames, for example, possibly after a STA querying for the information through a Probe Request frame. This element can be also used by any other frame that makes use of the EBCS Tx Content ID elements.

Another embodiment includes the Extended Reduced Neighbor Report. An AP may indicate information on the surrounding APs, such as the time to the next EBCS Info frame, using the Extended Reduced Neighbor Report. This may reduce the time required to find another AP serving the same EBCS.

Another embodiment includes the Neighbor Report Optional subelements that may include information on when the next EBCS Info frame may be transmitted by a neighbor AP.

Another embodiment includes the Neighbor Report Optional subelements that may include a new element providing information on the available services and the neighbor AP certificate.

Another embodiment includes the EBCS Info frame indicating the transmission of the next EBCS Info frame by neighboring APs.

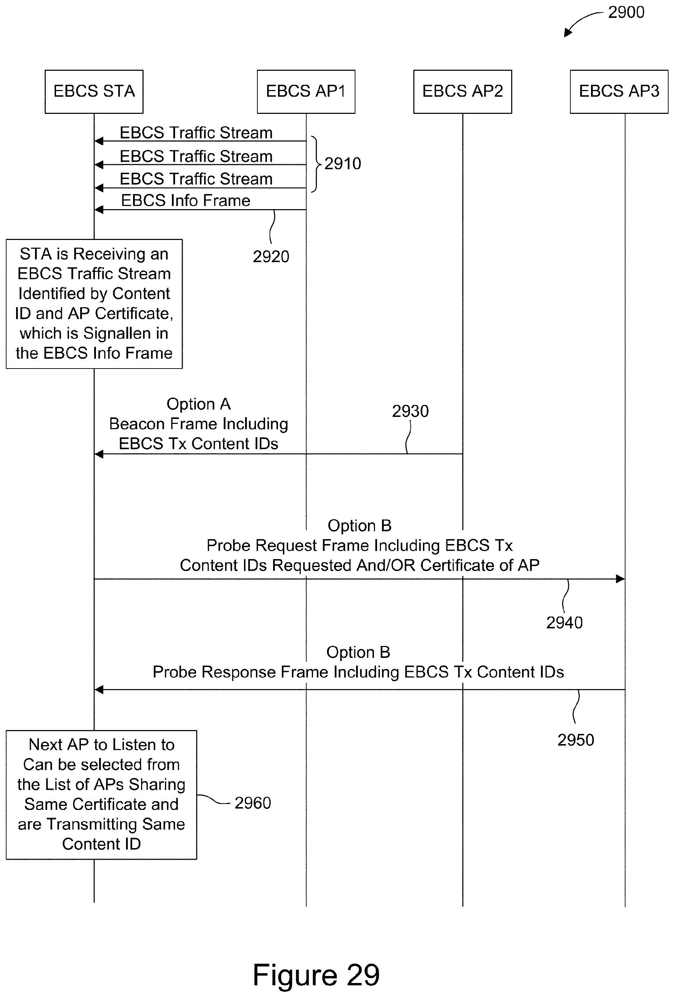

In one example, the EBCS Tx Contents ID element enables a STA to know what EBCS traffic streams are available at a certain AP. This will help the STA when roaming since it allows the STA to start listening to APs which are transmitting the desired EBCS traffic streams. An example signal flow diagram 2900 of EBCS Tx Content IDs being received by a STA is shown in Figure 29. An EBCS STA receives at least one EBCS traffic stream originated by EBCS AP1, 2910. The EBCS STA also receives an EBCS Info frame from EBCS AP1 2920. The EBCS traffic stream is identified by a Content ID and the Certificate of the EBCS AP1. Given this information, the STA may check if there are other neighbor APs broadcasting the same EBCS service. There are several ways the STA can do this using the above described embodiments. First, option A, the STA may the EBCS Tx Content IDs element that may be included in Beacon frames transmitted by EBCS AP2, 2930. Second, option B, the STA may transmit a Probe Request frame, 2940, requesting the transmission of the EBCS Tx Content IDs element, 2950. The Probe Request frame transmitted by the STA (2940) may include an EBCS Tc Content IDs element as described above to solicit specific information from the EBCS AP3. Based on the received EBCS Tx Content IDs, the STA can then select the next AP to continue receiving desired EBCS traffic streams, 2960.

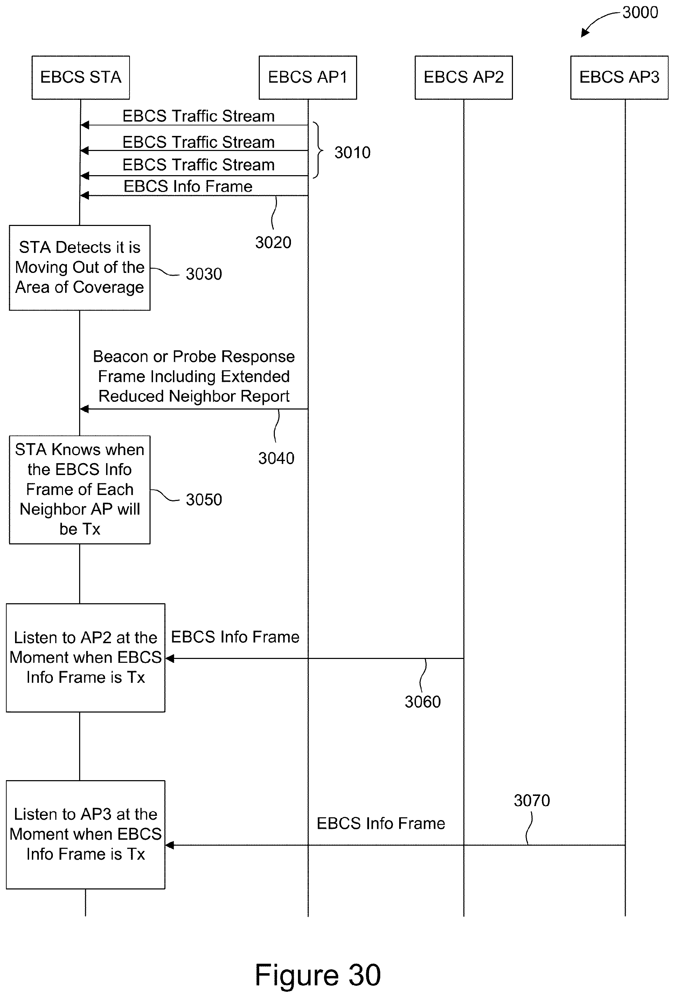

In another example, Figure 30 shows a signal flow diagram 3000 of the use of the Reduced Neighbor Report described above. This element may be included in Beacon frames and Probe Response frames and includes information to reduce time spent by a STA waiting for beacons and EBCS Info frame transmissions when a STA is searching for a suitable AP to receive an EBCS traffic stream.

EBCS STA receives an EBCS traffic stream from EBCS AP1, 3010. The EBCS STA also receives an EBCS Info frame from EBCS AP1, 3020. At some point, EBCS STA determines that it needs to receive the EBCS traffic stream from another AP (for example, due to low signal level due to mobility), 3030. The STA requests in a Probe Request frame and receives a Probe Response frame, or the STA receives a Beacon frame from EBCS AP1 including the extended Reduced Neighbor Report, 3040. The extended Reduced Neighbor Report informs the STA of information about the time when neighbor APs (for example, EBCS AP2 and EBCS AP3) will transmit their EBCS Info frame, 3050. Using this information, the EBCS STA receives an EBCS Info frame from EBCS AP2 3060. The EBCS STA, using the information from the Reduced Neighbor Report, does not need to change channel before the time at which EBCS AP2 will transmit the EBCS Info frame, therefore saving time that can be used to keep receiving an EBCS traffic stream frames from EBCS AP1. Similarly, the EBCS STA may receive an EBCS Info frame from EBCS AP3 based on the information included in the Reduced Neighbor Report 3070.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A station, STA, comprising:
a transmitter configured to transmit, to an access point, AP, a probe request frame; and
a receiver configured to receive, from the AP, a probe response frame including enhanced broadcast services, EBCS, parameters, wherein the EBCS parameters include a control field, a first field including information associated with a next transmission of an EBCS Info frame, and a second field including information associated with a certificate of the AP, wherein the control field includes a first indication that the first field is present in the EBCS parameters and a second indication the second field is present in the EBCS parameters.

2. The STA of claim 1, further comprising:
at least one processor configured to decode the received beacon frame to enable the STA to receive a desired EBCS traffic stream from the AP based on the EBCS parameters.

3. The STA of claim 1, wherein the information associated with a certificate of the AP is a hash of the certificate of the AP.

4. The STA of claim 1, wherein the receiver is further configured to receive, based on the first field, an EBCS Info frame from the AP.

5. The STA of claim 4, wherein the receiver is further configured to receive the desired EBCS traffic stream from the AP based on the received EBCS Info frame.

6. A method for use in a station, STA, the method comprising:
transmitting, to an access point, AP, a probe request frame; and
receiving, from the AP, a probe response frame including enhanced broadcast services, EBCS, parameters, wherein the EBCS parameters include a control field, a first field including information associated with a next transmission of an EBCS Info frame, and a second field including information associated with a certificate of the AP, wherein the control field includes a first indication that the first field is present in the EBCS parameters and a second indication the second field is present in the EBCS parameters.

7. The method of claim 6, further comprising:
decoding the received beacon frame to enable the STA to receive a desired EBCS traffic stream from the AP based on the EBCS parameters.

8. The method of claim 6, wherein the information associated with a certificate of the AP is a hash of the certificate of the AP.

9. The method of claim 6, further comprising:
receiving, based on the first field, an EBCS Info frame from the AP.

10. The method of claim 9, further comprising:
receiving the desired EBCS traffic stream from the AP based on the received EBCS Info frame.

11. A station, STA, comprising:
a receiver configured to receive, from an access point, AP, a beacon frame including enhanced broadcast services, EBCS, parameters, wherein the EBCS parameters include a control field, a first field including information associated with a next transmission of an EBCS Info frame, and a second field including information associated with a certificate of the AP, wherein the control field includes a first indication that the first field is present in the EBCS parameters and a second indication the second field is present in the EBCS parameters; and
at least one processor configured to decode the received beacon frame to enable the STA to receive a desired EBCS traffic stream from the AP based on the EBCS parameters.

12. The STA of claim 11, wherein the information associated with a certificate of the AP is a hash of the certificate of the AP.

13. The STA of claim 11, wherein the receiver is further configured to receive, based on the first field, an EBCS Info frame from the AP.

14. The STA of claim 13, wherein the receiver is further configured to receive the desired EBCS traffic stream from the AP based on the received EBCS Info frame.
